(19) Europäisches Patentamt
European Patent Office
Office européen des brevets

(11) EP 3 245 728 B1

(12) EUROPÄISCHE PATENTSCHRIFT

(45) Veröffentlichungstag und Bekanntmachung des Hinweises auf die Patenterteilung:
25.09.2019 Patentblatt 2019/39

(21) Anmeldenummer: 15791308.8

(22) Anmeldetag: 10.11.2015

(51) Int Cl.:
H02P 3/14 (2006.01)    H02P 3/22 (2006.01)
E05F 5/00 (2017.01)    E05F 15/63 (2015.01)

(86) Internationale Anmeldenummer:
PCT/EP2015/076154

(87) Internationale Veröffentlichungsnummer:
WO 2016/113012 (21.07.2016 Gazette 2016/29)

(54) **BREMSVORRICHTUNG FÜR EINEN BEWEGLICHEN TÜRFLÜGEL UND EINEN KORRESPONDIERENDEN TÜRSCHLIESSER**

BRAKING ELEMENT FOR A MOVEABLE DOOR LEAF AND A CORRESPONDING DOOR CLOSER

DISPOSITIF DE FREINAGE D'UN BATTANT DE PORTE MOBILE ET DISPOSITIF DE FERMETURE DE PORTE CORRESPONDANT

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 13.01.2015 DE 102015200284

(43) Veröffentlichungstag der Anmeldung:
22.11.2017 Patentblatt 2017/47

(73) Patentinhaber: GEZE GmbH
71229 Leonberg (DE)

(72) Erfinder: HUCKER, Matthias
76359 Marxzell (DE)

(56) Entgegenhaltungen:
DE-A1- 10 163 558    DE-A1-102005 028 007
JP-A- 2002 249 062    JP-A- 2004 345 558
US-A1- 2014 368 133

**Beschreibung**

Die Erfindung betrifft eine Bremsvorrichtung für einen beweglichen Türflügel der im Oberbegriff von Patentanspruch 1 angegebenen Art und einen korrespondierenden Türschließer der im Oberbegriff von Patentanspruch 16 angegebenen Art.

Aus dem Stand der Technik sind Türschließer für bewegliche Türflügel mit einem mechanischen Energiespeicher und einer Bremsvorrichtung bekannt und weit verbreitet. Beim manuellen Öffnen des Türflügels wird der mechanische Energiespeicher mit potentieller Energie aufgeladen, welche den losgelassenen Türflügel wieder schließt. Der mechanische Energiespeicher ist beispielsweise als Feder ausgeführt, welche durch das manuelle Öffnen des Türflügels gespannt wird. Danach schließt die potentielle Energie in der Feder den Türflügel. Das Schließmoment des Türflügels ist dabei durch die aktuelle Federspannung und die verschiedenen Übersetzungen im System bestimmt. Die Schließgeschwindigkeit selbst wird in der Bremsvorrichtung beispielsweise durch Öl in einem Dämpfer gedämpft. Durch verschiedene hydraulische Ventile und deren Einstellung kann das gewünschte Schließverhalten des Türflügels eingestellt werden. Dies ermöglicht eine kostengünstige und autarke Implementierung des Türschließers, d.h. der Türschließer funktioniert ohne Zuführung von externer Energie. Allerdings ist Schließgeschwindigkeit des Türflügels mit Ventilen nur in Grenzen einstellbar. So hat beispielsweise eine Endschlagfunktion immer denselben Einsatzpunkt, da nur der Durchfluss aber nicht die Position des Ventils einstellbar ist. Des Weiteren können Funktionen, welche von der aktuellen Geschwindigkeit des Türflügels abhängen, nur aufwändig realisiert werden. Auch gestaltet sich die Regelung der Schließgeschwindigkeit, beispielsweise auf eine gewünschte Schließzeit des Türflügels, als schwierig. Durch Probieren müssen die Ventile entsprechend eingestellt werden. Ändern sich dann die Temperatur des Dämpferöls oder die Reibungsverhältnisse im Türschließer so ändert sich auch die Schließzeit. Zudem kann es durch austretendes Dämpferöl zu Verschmutzungen der Umwelt kommen, falls der Türschließer undicht wird, und das Dämpferöl muss entsorgt werden. Außerdem ist das Dämpferöl in der Regel brennbar, was zur Ausbreitung des Brandes beitragen kann, wenn es im Brandfall austritt und sich entzündet.

Aus der DE 10 2005 028 007 B4 ist ein Antrieb zum Betätigen eines beweglichen Türflügels mit einer gattungsgemäßen Bremsvorrichtung bekannt. Die Bremsvorrichtung, durch welche die Bewegung des Türflügels gebremst werden kann, umfasst einen als Generator betriebenen Elektromotor, dessen Motorwelle durch eine Bewegung des Türflügels drehbar ist und an dessen Motorklemmen eine bewegungsabhängige Motorspannung entsteht, welche an einen Bremsstromkreis angelegt ist, wobei der Bremsstromkreis zumindest ein als Feldeffekttransistor (FET) ausgeführtes Schaltelement aufweist, über welches die Motorklemmen kurzschließbar sind. Im Bremsstromkreis ist eine Drain-Source-Strecke des Feldeffekttransistors angeordnet und eine Spannung zwischen Gate und Source des Feldeffekttransistors wird über ein Potentiometer eingestellt, welches in Parallelschaltung mit der Drain-Source-Strecke des Feldeffekttransistors angeordnet ist. Ein Spannungsabgriff des Potentiometers ist an den Gate-Anschluss des Feldeffekttransistors angeschlossen. Somit wird der Feldeffekttransistor als spannungsabhängiger Lastwiderstand für den Elektromotor betrieben, so dass die Bremskraft der Bremsvorrichtung von der Ausgangsspannung des als Generator betriebenen Elektromotors abhängig ist.

Der Erfindung liegt die Aufgabe zugrunde, eine Bremsvorrichtung für einen beweglichen Türflügel und einen korrespondierenden Türschließer anzugeben, welche eine verbesserte Einstellung der Schließgeschwindigkeit des Türflügels ermöglichen.

Diese Aufgabe wird durch die Merkmale der Bremsvorrichtung für einen beweglichen Türflügel nach Patentanspruch 1 und durch die Merkmale des Türschließers nach Patentanspruch 16 gelöst.

Vorteilhafte Ausgestaltungen und Weiterbildungen der Erfindung sind in den übrigen Ansprüchen angegeben.

Die erfindungsgemäße Bremsvorrichtung für einen beweglichen Türflügel weist einen als Generator betriebenen Elektromotor auf, dessen Motorwelle durch eine Bewegung des Türflügels drehbar ist und an dessen Motorklemmen eine bewegungsabhängige Motorspannung entsteht, welche an einen Bremsstromkreis angelegt ist. Hierbei weist der Bremsstromkreis zumindest ein Schaltelement auf, über welches die Motorklemmen kurzschließbar sind. Erfindungsgemäß führt eine Auswerte- und Steuereinheit über das Schaltelement eine Pulsweitenmodulation des Motorstroms durch und stellt eine wirksame Bremskraft zur Dämpfung der Bewegung des Türflügels ein. Vorzugsweise ist das Schaltelement als Feldeffekttransistor ausgeführt.

Zudem wird ein Türschließer mit einem mechanischen Energiespeicher, welcher durch manuelles Öffnen des Türflügels mit potentieller Energie aufladbar ist, welche den losgelassenen Türflügel schließt, und einer erfindungsgemäßen Bremsvorrichtung vorgeschlagen, welche die Bewegung des Türflügels dämpft.

Die Pulsweitenmodulation des Motorstroms ermöglicht in vorteilhafter Weise die Vorgabe einer Schließzeit, welche beispielsweise durch Regelung der Schließgeschwindigkeit als Funktion des Öffnungswinkels des Türflügels konstant gehalten werden kann. Die gewünschte Schließzeit kann in vorteilhafter Weise unabhängig von Temperatur, Alterung und Reibung vorgegeben und eingestellt werden. Zudem ermöglichen Ausführungsformen der erfindungsgemäßen Bremsvorrichtung die Implementierung von weiteren parametrierbaren und elektronisch einstellbaren Funktionen, wie beispielsweise einer Endschlagfunktion, welche variierende Einsatzpunkte für den Endschlag und die Endgeschwindigkeit des Flügels in Abhängigkeit von bestimmten Parametern vorgeben kann. Des Weiteren kann eine Öffnungsdämpfungsfunktion implementiert werden, welche die Öffnungsgeschwindigkeit des Türflügels ab einem bestimmten Öffnungswinkel dämpft. Des Weiteren können Zusatzfunktionen wie Zyklenzähler und Speicherung von Wartungsdaten einfach implementiert werden. Zudem weist die erfindungsgemäße Bremsvorrichtung keine leicht brennbaren Stoffe, wie beispielsweise Dämpferöl, auf.

Bei einer bevorzugten Ausführungsform der erfindungsgemäßen Bremsvorrichtung für einen beweglichen Türflügel kann die Auswerte- und Steuereinheit die Dämpfung der Bewegung des Türflügels in Abhängigkeit von einer aktuellen Bewegungsrichtung und/oder einer aktuellen Geschwindigkeit und/oder eines aktuellen Öffnungswinkels des Türflügels einstellen. Die Auswerte- und Steuereinheit kann beispielsweise über mindestens einen Messkreis aus der Motorspannung eine aktuelle Bewegungsrichtung und Geschwindigkeit des Türflügels bestimmen. Hierbei kann die Polarität der Motorspannung eine Information über die Bewegungsrichtung des Türflügels zur Verfügung stellen und die Höhe der Motorspannung kann eine Information zur Ermittlung der Geschwindigkeit des Türflügels zur Verfügung stellen. Zumindest ein erster Messkreis kann eine Öffnungsbewegung des Türflügels erkennen und eine Messgröße zur Ermittlung der Öffnungsgeschwindigkeit des Türflügels an die Auswerte- und Steuereinheit ausgeben. Zumindest ein zweiter Messkreis kann eine Schließbewegung des Türflügels erkennen und eine Messgröße zur Ermittlung der Schließgeschwindigkeit des Türflügels an die Auswerte- und Steuereinheit ausgeben. Zumindest ein dritter Messkreis kann einen Positionssensor umfassen, welcher eine Messgröße zur Ermittlung eines aktuellen Öffnungswinkels und/oder einer aktuellen Geschwindigkeit des Türflügels an die Auswerte- und Steuereinheit ausgeben kann.

In vorteilhafter Ausgestaltung der erfindungsgemäßen Bremsvorrichtung kann die Auswerte- und Steuereinheit die Öffnungsbewegung des Türflügels über die Pulsweitenmodulation des Motorstroms dämpfen, wenn die aktuelle Geschwindigkeit der Öffnungsbewegung einen vorgegebenen Geschwindigkeitsgrenzwert überschreitet. Zusätzlich oder alternativ kann die Auswerte- und Steuereinheit die Öffnungsbewegung des Türflügels über die Pulsweitenmodulation des Motorstroms dämpfen, wenn der aktuelle Öffnungswinkel des Türflügels einen vorgegebenen Öffnungswinkelgrenzwert überschreitet. Des Weiteren kann die Auswerte- und Steuereinheit die Dämpfung der Schließbewegung des Türflügels über die Pulsweitenmodulation des Motorstroms in Abhängigkeit von der aktuellen Geschwindigkeit und/oder des aktuellen Öffnungswinkels des Türflügels so regeln, dass eine vorgegebene Schließzeit erreicht werden kann. Zudem kann die Auswerte- und Steuereinheit die Dämpfung der Schließbewegung des Türflügels beenden, wenn der Türflügel mindestens eine vorgegebene Endschlagbedingung erreicht hat. Als Endschlagbedingung kann beispielsweise eine Endschlaggeschwindigkeit und/oder eine Endschlagposition vorgegeben werden.

In weiterer vorteilhafter Ausgestaltung der erfindungsgemäßen Bremsvorrichtung kann die Motorspannung an einen Ladestromkreis angelegt werden, welcher elektrische Energie in einem Kondensator zur Energieversorgung der Bremsvorrichtung speichert.

In weiterer vorteilhafter Ausgestaltung der erfindungsgemäßen Bremsvorrichtung können Parameter und/oder Grenzwerte zur Dämpfung der Bewegung des Türflügels in einem nichtflüchtigen Speicher gespeichert werden. Der nichtflüchtige Speicher kann beispielsweise im stromlosen Zustand der Bremsvorrichtung mittels RFID (Radio-Frequency Identification: Identifikation mit Hilfe elektromagnetischer Wellen) oder NFC (Near Field Communication: Nahfeldkommunikation) oder einer Hilfsspannung beschrieben werden.

In weiterer vorteilhafter Ausgestaltung der erfindungsgemäßen Bremsvorrichtung kann die Auswerte- und Steuereinheit mit jedem Öffnungszyklus des Türflügels einen Zähler im nichtflüchtigen Speicher inkrementieren und somit die Öffnungszyklen des Türflügels zählen. Zudem können Wartungsdaten im nichtflüchtigen Speicher gespeichert werden.

Nachfolgend werden Ausführungsbeispiele der Erfindung anhand von zeichnerischen Darstellungen näher erläutert.

Dabei zeigen:

Fig. 1 ein schematisches Blockdiagramm eines Ausführungsbeispiels eines erfindungsgemäßen Türschließers mit einem Ausführungsbeispiel einer erfindungsgemäßen Bremsvorrichtung, und

Fig. 2 ein schematisches Blockdiagramm einer Auswerte- und Steuereinheit für die erfindungsgemäße Bremsvorrichtung aus Fig. 1.

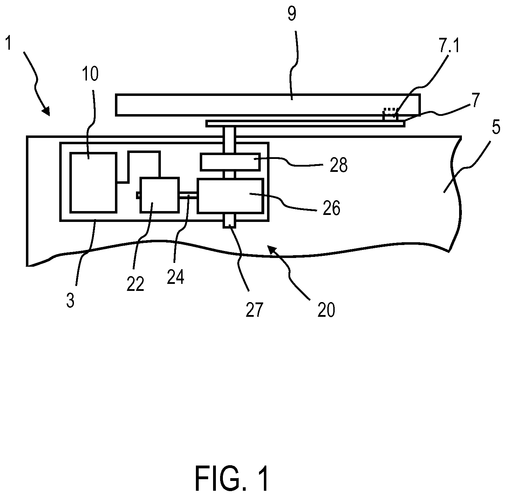

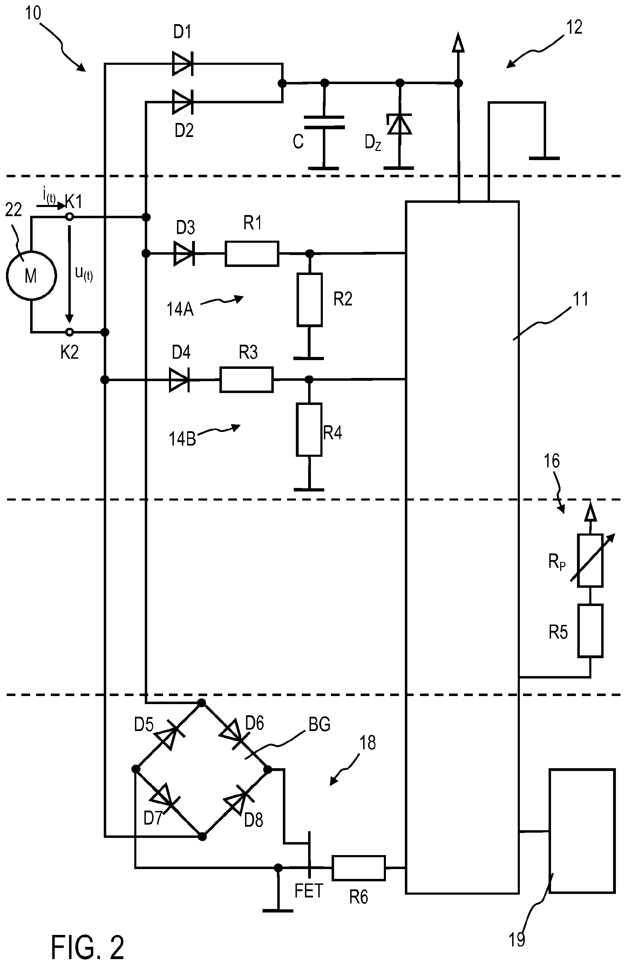

Wie aus Fig. 1 und 2 ersichtlich ist, weist ein Türschließer 1 im dargestellten Ausführungsbeispiel ein Gehäuse 3 auf, in welchem ein mechanischer Energiespeicher 28 und eine Bremsvorrichtung 20 angeordnet sind. Der mechanische Energiespeicher 28 ist vorzugsweise als Feder ausgeführt und wird durch manuelles Öffnen des Türflügels 5 mit potentieller Energie aufgeladen, welche den losgelassenen Türflügel 5 wieder schließt. Die Bremsvorrichtung 20 dämpft die Bewegung des Türflügels 5 und umfasst einen als Generator betriebenen Elektromotor 22, dessen Motorwelle 24 durch eine Bewegung des Türflügels 5 drehbar ist und an dessen Motorklemmen K1, K2 eine bewegungsabhängige Motorspannung $u_{(t)}$ entsteht, welche an einen Bremsstromkreis 18 angelegt ist. Der Bremsstromkreis 18 weist zumindest ein Schaltelement FET auf, über welches die Motorklemmen K1, K2 kurzgeschlossen werden können. Erfindungsgemäß führt eine Auswerte- und Steuereinheit 11 über das Schaltelement FET eine Pulsweitenmodulation des Motorstroms $i_{(t)}$ durch und stellt eine wirksame Bremskraft zur Dämpfung der Bewegung des Türflügels 5 ein. Im dargestellten Ausführungsbeispiel ist das Schaltelement als Feldeffekttransistor FET ausgeführt.

Wie aus Fig. 1 weiter ersichtlich ist, ist bei dem dargestellten Ausführungsbeispiel das Gehäuse 3 flügelfest am oberen linken Randbereich des beweglichen Türflügels 5 montiert. Die Motorwelle 24 des Elektromotors 22 ist über ein Getriebe 26 mit einer Abtriebswelle 27 gekoppelt, welche mit einem Gleitarm 7 gekoppelt ist. Der Gleitarm 7 weist an seinem freien Ende einen Gleitstein 7.1 auf, welcher in einer blendenfest montierten Gleitschiene 9 geführt ist. Der Elektromotor 22 ist vorzugsweise als permanent magnetischer erregter Gleichstrommotor ausgeführt.

Beim Öffnen und Schließen des Türflügels 5 wird über das Getriebe 26 die Motorwelle 24 des Elektromotors 22 gedreht. Dabei kann, muss aber nicht, auch der als Feder ausgeführte mechanische Energiespeicher 28 gespannt oder entspannt werden. Bei Freischwing-Systemen kann die Feder 28 beispielsweise in der gespannten Lage (Tür offen) gehalten werden, beim Bewegen des Türflügels 5 wird aber trotzdem die Motorwelle 24 gedreht. Dreht sich die Motorwelle 24, liegt an den Motorklemmen K1, K2 die Motorspannung $u_{(t)}$ an, welche von der Winkelgeschwindigkeit $\omega_{(t)}$ des Elektromotors 22 abhängig ist und gemäß Formel (1) abgeschätzt werden kann.

$$u_{(t)} \approx R * i_{(t)} + K \omega_{(t)} \qquad (1)$$

Hierbei repräsentiert K eine Motorkonstante, i(t) den Motorstrom und R den ohmschen Widerstand der Motorwicklungen. Sind die Klemmen K1, K2 offen ($i_{(t)} \approx 0$) gilt Formel (2):

$$u_{(t)} \approx K \omega_{(t)} \qquad (2)$$

Sind die Klemmen kurzgeschlossen ($u_{(t)} \approx 0$) gilt Formel (3):

$$J \frac{d\omega_{(t)}}{dt} - \frac{K^2}{R} \omega_{(t)} \approx m_{F(t)} \qquad (3)$$

Hierbei repräsentiert $J \dfrac{d\omega_{(t)}}{dt}$ das Trägheitsmoment des Systems, $\dfrac{K^2}{R} \omega_{(t)}$ das Bremsmoment des Elektromotors 22 und $m_{F(t)}$ das Moment des mechanischen Speichers 28.

Wie aus Fig. 2 weiter ersichtlich ist, ist Auswerte- und Steuereinheit 11 als Mikrocontroller ausgeführt und Teil einer Auswerte- und Steuerelektronik 10. Die Auswerte- und Steuerelektronik 10 umfasst einen Ladestromkreis 12, an welchen die Motorspannung u(t) angelegt ist und welcher elektrische Energie in einem Kondensator C zur Energieversorgung der Bremsvorrichtung 20 speichert. In Abhängigkeit von der Polarität der Motorspannung u(t) wird diese über eine erste Diode D1 oder über eine zweite Diode D1 an den Speicherkondensator C angelegt. Eine Zenerdiode $D_Z$ begrenzt die maximale Spannung. Zudem umfasst die Auswerte- und Steuerelektronik 10 im dargestellten Ausführungsbeispiel einen ersten Messkreis 14A mit einer dritten Diode D3 und einem Spannungsteiler, welcher einen ersten ohmschen Widerstand R1 und einen zweiten ohmschen Widerstand R2 aufweist. Der erste Messkreis 14A erkennt aufgrund der Polung der dritten Diode D3 eine Öffnungsbewegung des Türflügels 5 und gibt am Abgriff zwischen dem ersten und zweiten ohmschen Widerstand R1, R2 eine Messgröße zur Ermittlung der Öffnungsgeschwindigkeit des Türflügels 5 an die Auswerte- und Steuereinheit 11 aus. Des Weiteren umfasst die Auswerte- und Steuerelektronik 10 im dargestellten Ausführungsbeispiel einen zweiten Messkreis 14B mit einer vierten Diode D4 und einem weiteren Spannungsteiler, welcher einen dritten ohmschen Widerstand R3 und einen vierten ohmschen Widerstand R4 aufweist. Der zweite Messkreis 14B erkennt aufgrund der Polung der vierten Diode D4 eine Schließbewegung des Türflügels 5 und gibt am Abgriff zwischen dem dritten und vierten ohmschen Widerstand R3, R4 eine Messgröße zur Ermittlung der Schließgeschwindigkeit des Türflügels 5 an die Auswerte- und Steuereinheit 11 aus. Ein dritter Messkreis 16 der Auswerte- und Steuerelektronik 10 umfasst einen Positionssensor $R_P$, welcher eine Messgröße zur Ermittlung eines aktuellen Öffnungswinkels und/oder einer aktuellen Geschwindigkeit des Türflügels 5 an die Auswerte- und Steuereinheit 11 ausgibt. Der Positionssensor RP kann beispielsweise als Folienpotentiometer ausgeführt werden, zu welchem ein Schutzwiderstand R5 zur Strombegrenzung in Reihe geschaltet werden kann. Somit kann die Auswerte- und Steuereinheit 11 über die Messkreise 14A, 14B aus der Motorspannung $u_{(t)}$ eine aktuelle Bewegungsrichtung und Geschwindigkeit des Türflügels 5 bestimmen. Über den dritten Messkreis 16 kann die Auswerte- und Steuereinheit 11 den absoluten Öffnungswinkel oder die Geschwindigkeit des Türflügels 5 bestimmen.

Wie aus Fig. 2 weiter ersichtlich ist, umfasst der Bremsstromkreis 18 den Feldeffekttransistor FET einen Gatewiderstand R6, über welchen das Gate des Feldeffekttransistors FET mit der Auswerte- und Steuereinheit 11 elektrisch verbunden ist, und eine Brückengleichrichterschaltung BG mit vier Dioden D5, D6, D7, D8, welche bewirkt, dass die Polarität der an der Drain-Source-Strecke des Feldeffekttransistors FET anliegenden Spannung unabhängig von der Polarität der Motorspannung u(t) des als Generator betriebenen Elektromotors 22 gleich bleibt.

Über den Feldeffekttransistor FET steuert die Auswerte- und Steuereinheit 11 nun den Kurzschluss an den Motorklemmen K1, K2 nach folgendem Prinzip:

Die Auswerte- und Steuereinheit 11 öffnet die Motorklemmen K1, K2 und lädt die elektrische Energie in den Kondensator C der Ladeschaltung 12. Die im Kondensator C gespeicherte Energie wird zur Energieversorgung der Auswerte- und Steuerelektronik 10 verwendet. Zudem bestimmt die Auswerte- und Steuereinheit 11 während die Motorklemmen K1, K2 offen sind über den ersten oder zweiten Messkreis 14A, 14B die Winkelgeschwindigkeit des Elektromotors 22, also die Geschwindigkeit des Türflügels 5. Zusätzlich kann die Auswerte- und Steuereinheit 11 über den dritten Messkreis 16 die Position bzw. die Geschwindigkeit des Türflügels 5 bestimmen.

Zur Dämpfung der Bewegung des Türflügels 4 schließt die Auswerte- und Steuereinheit 11 die Motorklemmen K1, K2 über den Feldeffekttransistor FET kurz. Während des Kurzschlusses wird die Winkelgeschwindigkeit des Elektromotors 22 gedämpft. Durch die Pulsweitenmodulation des Kurzschlussstromes $i_{(t)}$ stellt die Auswerte- und Steuereinheit 11 die Dämpfung der Geschwindigkeit und somit die Bremskraft ein und sorgt für das Nachladen ihrer Energieversorgung.

Des Weiteren sorgt die Auswerte- und Steuereinheit 11 durch Regelung der Schließgeschwindigkeit als Funktion vom Öffnungswinkel des Türflügels 5 für die gewünschte Schließzeit. Die Schließzeit ist somit unabhängig von Temperatur, Alterung und Reibung. Das bedeutet, dass die Auswerte- und Steuereinheit 11 die Dämpfung der Bewegung des Türflügels 5 in Abhängigkeit von einer aktuellen Bewegungsrichtung und/oder einer aktuellen Geschwindigkeit und/oder eines aktuellen Öffnungswinkels des Türflügels 5 einstellt. So kann die Auswerte- und Steuereinheit 11 die Öffnungsbewegung des Türflügels 5 über die Pulsweitenmodulation des Motorstroms $i_{(t)}$ dämpft, wenn die aktuelle Geschwindigkeit der Öffnungsbewegung einen vorgegebenen Geschwindigkeitsgrenzwert überschreitet.

Zudem kann die Auswerte- und Steuereinheit 11 den Einsatzpunkt des Endschlags und die Endgeschwindigkeit auf die gewünschten Werte regeln. Das bedeutet, dass die Auswerte- und Steuereinheit 11 die Dämpfung der Schließbewegung des Türflügels 5 beendet, wenn der Türflügel 5 mindestens eine vorgegebene Endschlagbedingung erreicht hat. Als Endschlagbedingung kann beispielsweise eine Endschlaggeschwindigkeit und/oder eine Endschlagposition vorgegeben werden.

Die Auswerte- und Steuereinheit 11 dämpft die Öffnungsgeschwindigkeit des Türflügels 4 ab einem bestimmten Öffnungswinkel. Das bedeutet, dass die Auswerte- und Steuereinheit 11 die Öffnungsbewegung des Türflügels 5 über die Pulsweitenmodulation des Motorstroms $i_{(t)}$ dämpft, wenn der aktuelle Öffnungswinkel des Türflügels 5 einen vorgegebenen Öffnungswinkelgrenzwert überschreitet.

Außerdem inkrementiert die Auswerte- und Steuereinheit 11 mit jedem Öffnungszyklus einen Zähler in einem nichtflüchtigen Datenspeicher 19. Die gewünschten Parameter kann die Auswerte- und Steuereinheit 11 aus dem nichtflüchtigen Datenspeicher 19 auslesen. Die Parameter und/oder Grenzwerte zur Dämpfung der Bewegung des Türflügels 5 können beispielsweise im stromlosen Zustand der Auswerte- und Steuerelektronik 10 mittels RFID oder NFC oder einer Hilfsspannung und einem Programmiergerät in den nichtflüchtigen Datenspeicher 19 geschrieben werden. Außerdem können bei Bedarf im stromlosen Zustand der Auswerte- und Steuerelektronik 10 Wartungsdaten in den nichtflüchtigen Datenspeicher 19 geschrieben und aus diesem gelesen werden. Dies gilt auch für den Stand des Zyklenzählers im Datenspeicher 19.

**Bezugszeichenliste**

| 1 | Türschließer |
|---|---|
| 3 | Gehäuse |
| 5 | Türflügel |
| 7 | Gleitarm |
| 7.1 | Gleitstein |
| 9 | Gleitschiene |
| 10 | Auswerte- und Steuerelektronik |
| 11 | Auswerte- und Steuereinheit (Mikrocontroller) |
| 12 | Ladestromkreis (Energieversorgung) |
| 14A | erster Messkreis (Geschwindigkeitsmessung) |

| 14B | zweiter Messkreis (Geschwindigkeitsmessung) |
| 16 | dritter Messkreis (Positionsbestimmung) |
| 18 | Bremsstromkreis (Pulsweitenmodulation) |
| 19 | nichtflüchtiger Speicher |
| 20 | Bremsvorrichtung |
| 22 | Elektromotor |
| 24 | Motorwelle |
| 26 | Getriebe |
| 27 | Abtriebswelle |
| 28 | mechanischer Energiespeicher |
| D1 bis D8 | Diode |
| R1 bis R6 | ohmscher Widerstand |
| $R_P$ | Potentiometer |
| C | elektrischer Energiespeicher |
| $D_Z$ | Zenerdiode |
| FET | Feldeffekttransistor |
| BG | Brückengleichrichter |
| K1, K2 | Motorklemme |
| u(t) | Motorspannung |
| i(t) | Motorstrom |

**Patentansprüche**

**1.** Bremsvorrichtung (20) für einen beweglichen Türflügel (5) mit einem als Generator betriebenen Elektromotor (22) dessen Motorwelle (24) durch eine Bewegung des Türflügels (5) drehbar ist und an dessen Motorklemmen (K1, K2) eine bewegungsabhängige Motorspannung ($u_{(t)}$) entsteht, welche an einen Bremsstromkreis (18) angelegt ist, wobei der Bremsstromkreis (18) zumindest ein Schaltelement (FET) aufweist, über welches die Motorklemmen (K1, K2) kurzschließbar sind, **gekennzeichnet durch** eine Auswerte- und Steuereinheit (11), die so ausgeführt ist, daß sie über das Schaltelement (FET) eine Pulsweitenmodulation des Motorstroms ($i_{(t)}$) durchführt und eine wirksame Bremskraft zur Dämpfung der Bewegung des Türflügels (5) einstellt, wobei die Auswerte- und Steuereinheit (11) die Dämpfung der Bewegung des Türflügels (5) in Abhängigkeit von einer aktuellen Bewegungsrichtung und/oder einer aktuellen Geschwindigkeit und/oder eines aktuellen Öffnungswinkels des Türflügels (5) einstellt.

**2.** Bremsvorrichtung nach Anspruch 1,
**dadurch gekennzeichnet,**
**dass** das Schaltelement als Feldeffekttransistor (FET) ausgeführt ist.

**3.** Bremsvorrichtung nach Anspruch 1,
**dadurch gekennzeichnet,**
**dass** die Auswerte- und Steuereinheit (11) über mindestens einen Messkreis (14A, 14B) aus der Motorspannung ($u_{(t)}$) eine aktuelle Bewegungsrichtung und Geschwindigkeit des Türflügels (5) bestimmt.

**4.** Bremsvorrichtung nach Anspruch 3,
**dadurch gekennzeichnet,**
**dass** zumindest ein erster Messkreis (14A) eine Öffnungsbewegung des Türflügels (5) erkennt und eine Messgröße zur Ermittlung der Öffnungsgeschwindigkeit des Türflügels (5) an die Auswerte- und Steuereinheit (11) ausgibt.

**5.** Bremsvorrichtung nach Anspruch 3 oder 4,
**dadurch gekennzeichnet,**
**dass** zumindest ein zweiter Messkreis (14B) eine Schließbewegung des Türflügels (5) erkennt und eine Messgröße zur Ermittlung der Schließgeschwindigkeit des Türflügels (5) an die Auswerte- und Steuereinheit (11) ausgibt.

**6.** Bremsvorrichtung nach einem der Ansprüche 1 bis 5,
**dadurch gekennzeichnet,**
**dass** zumindest ein dritter Messkreis (16) einen Positionssensor ($R_P$) umfasst, welcher eine Messgröße zur Ermittlung eines aktuellen Öffnungswinkels und/oder einer aktuellen Geschwindigkeit des Türflügels (5) an die Auswerte- und Steuereinheit (11) ausgibt.

**7.** Bremsvorrichtung nach einem der Ansprüche 1 bis 6,
**dadurch gekennzeichnet,**
**dass** die Auswerte- und Steuereinheit (11) die Öffnungsbewegung des Türflügels (5) über die Pulsweitenmodulation des Motorstroms ($i_{(t)}$) dämpft, wenn die aktuelle Geschwindigkeit der Öffnungsbewegung einen vorgegebenen Geschwindigkeitsgrenzwert überschreitet.

**8.** Bremsvorrichtung nach einem der Ansprüche 1 bis 7,
**dadurch gekennzeichnet,**
**dass** die Auswerte- und Steuereinheit (11) die Öffnungsbewegung des Türflügels (5) über die Pulsweitenmodulation des Motorstroms ($i_{(t)}$ dämpft, wenn der aktuelle Öffnungswinkel des Türflügels (5) einen vorgegebenen Öffnungswinkelgrenzwert überschreitet.

**9.** Bremsvorrichtung nach einem der Ansprüche 1 bis 8,
**dadurch gekennzeichnet,**
**dass** die Auswerte- und Steuereinheit (11) die Dämpfung der Schließbewegung des Türflügels (5) über die Pulsweitenmodulation des Motorstroms ($i_{(t)}$) in Abhängigkeit von der aktuellen Geschwindigkeit und/oder des aktuellen Öffnungswinkels des Türflügels (5) so regelt, dass eine vorgegebene Schließzeit erreicht wird.

**10.** Bremsvorrichtung nach Anspruch 9,
**dadurch gekennzeichnet,**
**dass** die Auswerte- und Steuereinheit (11) die Dämpfung der Schließbewegung des Türflügels (5) beendet, wenn der Türflügel (5) mindestens eine vorgegebene Endschlagbedingung erreicht hat.

**11.** Bremsvorrichtung nach Anspruch 10,
**dadurch gekennzeichnet,**
**dass** eine Endschlaggeschwindigkeit und/oder eine Endschlagposition als Endschlagbedingung vorgegeben sind.

**12.** Bremsvorrichtung nach einem der Ansprüche 1 bis 11,
**dadurch gekennzeichnet,**
**dass** die Motorspannung ($u_{(t)}$) an einen Ladestromkreis (12) angelegt ist, welcher elektrische Energie in einem Kondensator (C) zur Energieversorgung der Bremsvorrichtung (20) speichert.

**13.** Bremsvorrichtung nach einem der Ansprüche 1 bis 12,
**dadurch gekennzeichnet,**
**dass** Parameter und/oder Grenzwerte zur Dämpfung der Bewegung des Türflügels (5) in einem nichtflüchtigen Speicher (19) gespeichert sind.

**14.** Bremsvorrichtung nach Anspruch 13,
**dadurch gekennzeichnet,**
**dass** der nichtflüchtige Speicher (19) im stromlosen Zustand der Bremsvorrichtung (20) mittels RFID oder NFC oder einer Hilfsspannung beschreibbar ist.

**15.** Bremsvorrichtung nach Anspruch 13 oder 14,
**dadurch gekennzeichnet,**
**dass** die Auswerte- und Steuereinheit (11) mit jedem Öffnungszyklus des Türflügels (5) einen Zähler im nichtflüchtigen Speicher (19) inkrementiert.

**16.** Türschließer (1) mit einem mechanischen Energiespeicher (28), welcher durch manuelles Öffnen des Türflügels (5) mit potentieller Energie aufladbar ist, welche den losgelassenen Türflügel (5) schließt, und einer Bremsvorrichtung (20), welche die Bewegung des Türflügels (5) dämpft,
**dadurch gekennzeichnet,**
**dass** die Bremsvorrichtung (20) nach mindestens einem der Ansprüche 1 bis 15 ausgeführt ist.

**Claims**

**1.** Braking element (20) for a moveable door leaf (5) is having an electric motor (22) which can be operated as a generator and of which the motor shaft (24) can be rotated by a movement of the door leaf (5), and on the motor terminals (K1, K2) of which a movement-dependent motor voltage ($u_{(t)}$) is produced, which is applied to a brake circuit (18), the brake circuit (18) having at least one switching element (FET), via which the motor terminals (K1, K2) can be short-circuited,

**characterized by**

an evaluation and control unit (11), which is designed such that it carries out pulse-width modulation of the motor current ($i_{(t)}$) via the switching element (FET) and adjusts an effective braking force for damping the movement of the door leaf (5), the evaluation and control unit (11) adjusting the damping of the movement of the door leaf (5) as a function of a current direction of movement and/or a current speed and/or a current opening angle of the door leaf (5).

2. Braking element according to Claim 1,
   **characterized in that**
   the switching element is designed as a field effect transistor (FET).

3. Braking element according to Claim 1,
   **characterized in that**
   the evaluation and control unit (11) determines a current direction of movement and speed of the door leaf (5) from the motor voltage ($u_{(t)}$) via at least one measuring circuit (14A, 14B).

4. Braking element according to Claim 3,
   **characterized in that**
   at least one first measuring circuit (14A) detects an opening movement of the door leaf (5) and outputs a measured variable for determining the opening speed of the door leaf (5) to the evaluation and control unit (11).

5. Braking element according to Claim 3 or 4,
   **characterized in that**
   at least one second measuring circuit (14B) detects a closing movement of the door leaf (5) and outputs a measured variable for determining the closing speed of the door leaf (5) to the evaluation and control unit (11).

6. Braking element according to one of Claims 1 to 5,
   **characterized in that**
   at least one third measuring circuit (16) comprises a position sensor ($R_P$), which outputs a measured variable for determining a current opening angle and/or a current speed of the door leaf (5) to the evaluation and control unit (11).

7. Braking element according to one of Claims 1 to 6,
   **characterized in that**
   the evaluation and control unit (11) damps the opening movement of the door leaf (5) via the pulse-width modulation of the motor current ($i_{(t)}$) if the current speed of the opening movement exceeds a predefined speed limiting value.

8. Braking element according to one of Claims 1 to 7,
   **characterized in that**
   the evaluation and control unit (11) damps the opening movement of the door leaf (5) via the pulse-width modulation of the motor current ($i_{(t)}$) if the current opening angle of the door leaf (5) exceeds a predefined opening angle limiting value.

9. Braking element according to one of Claims 1 to 8,
   **characterized in that**
   the evaluation and control unit (11) controls the damping of the closing movement of the door leaf (5) via the pulse-width modulation of the motor current ($i_{(t)}$) as a function of the current speed and/or the current opening angle of the door leaf (5), such that a predefined closing time is achieved.

10. Braking element according to Claim 9,
    **characterized in that**
    the evaluation and control unit (11) ends the damping of the closing movement of the door leaf (5) if the door leaf (5) has reached at least one predefined end stop condition.

11. Braking element according to Claim 10,
    **characterized in that**
    an end stop speed and/or an end stop position are predefined as an end stop condition.

**12.** Braking element according to one of Claims 1 to 11,
**characterized in that**
the motor voltage ($u_{(t)}$) is applied to a charging circuit (12), which stores electrical energy in a capacitor (C) for supplying energy to the braking element (20).

**13.** Braking element according to one of Claims 1 to 12,
**characterized in that**
parameters and/or limiting values for damping the movement of the door leaf (5) are stored in a non-volatile memory (19).

**14.** Braking element according to Claim 13,
**characterized in that**
when the braking element (20) is de-energized, the non-volatile memory (19) can be written by means of RFID or NFC or an auxiliary voltage.

**15.** Braking element according to Claim 13 or 14,
**characterized in that**
the evaluation and control unit (11) increments a counter in the non-volatile memory (19) with each opening cycle of the door leaf (5).

**16.** Door closer (1) having a mechanical energy store (28) which can be charged with potential energy by opening the door leaf (5) manually, which energy closes the released door leaf (5), and a braking element (20) which damps the movement of the door leaf (5),
**characterized in that**
the braking element (20) is designed according to one of Claims 1 to 15.


**Revendications**

**1.** Dispositif de freinage (20) pour un battant de porte mobile (5) avec un moteur électrique (22) fonctionnant en générateur, dont l'arbre de moteur (24) peut tourner par un mouvement du battant de porte (5) et aux bornes de moteur (K1, K2) duquel il apparaît une tension de moteur dépendant du mouvement ($u_{(t)}$), qui est appliquée à un circuit électrique de frein (18), dans lequel le circuit électrique de frein (18) présente au moins un élément de commutation (FET), par lequel les bornes du moteur (K1, K2) peuvent être mises en court-circuit,
**caractérisé par** une unité d'évaluation et de commande (11), qui est configurée de telle manière qu'elle effectue par l'intermédiaire de l'élément de commutation (FET) une modulation de largeur d'impulsion du courant du moteur ($i_{(t)}$) et qu'elle règle une force de freinage active par amortissement du mouvement du battant de porte (5), dans lequel l'unité d'évaluation et de commande (11) règle l'amortissement du mouvement du battant de porte (5) en fonction d'une direction de mouvement actuelle et/ou d'une vitesse actuelle et/ou d'un angle d'ouverture actuel du battant de porte (5).

**2.** Dispositif de freinage selon la revendication 1,
**caractérisé en ce que** l'élément de commutation est réalisé sous la forme d'un transistor à effet de champ (FET) .

**3.** Dispositif de freinage selon la revendication 1,
**caractérisé en ce que** l'unité d'évaluation et de commande (11) détermine au moyen d'au moins un circuit de mesure (14A, 14B) à partir de la tension du moteur ($u_{(t)}$) une direction de mouvement actuelle et une vitesse actuelle du battant de porte (5).

**4.** Dispositif de freinage selon la revendication 3,
**caractérisé en ce qu'**au moins un premier circuit de mesure (14A) détecte un mouvement d'ouverture du battant de porte (5) et envoie une grandeur de mesure pour déterminer la vitesse d'ouverture du battant de porte (5) à l'unité d'évaluation et de commande (11).

**5.** Dispositif de freinage selon une revendication 3 ou 4, **caractérisé en ce qu'**au moins un deuxième circuit de mesure (14B) détecte un mouvement de fermeture du battant de porte (5) et envoie une grandeur de mesure pour déterminer la vitesse de fermeture du battant de porte (5) à l'unité d'évaluation et de commande (11).

**6.** Dispositif de freinage selon l'une quelconque des revendications 1 à 5, **caractérisé en ce qu'**au moins un troisième circuit de mesure (16) comprend un détecteur de position ($R_P$), qui envoie une grandeur de mesure pour la détermination d'un angle d'ouverture actuel et/ou d'une vitesse actuelle du battant de porte (5) à l'unité d'évaluation et de commande (11).

**7.** Dispositif de freinage selon l'une quelconque des revendications 1 à 6, **caractérisé en ce que** l'unité d'évaluation et de commande (11) amortit le mouvement d'ouverture du battant de porte (5) par la modulation de largeur d'impulsion du courant du moteur ($i_{(t)}$), lorsque la vitesse actuelle du mouvement d'ouverture dépasse une valeur limite prédéterminée de la vitesse.

**8.** Dispositif de freinage selon l'une quelconque des revendications 1 à 7, **caractérisé en ce que** l'unité d'évaluation et de commande (11) amortit le mouvement d'ouverture du battant de porte (5) par la modulation de largeur d'impulsion du courant du moteur ($i_{(t)}$), lorsque l'angle d'ouverture actuel du battant de porte (5) dépasse une valeur limite prédéterminée de l'angle d'ouverture.

**9.** Dispositif de freinage selon l'une quelconque des revendications 1 à 8, **caractérisé en ce que** l'unité d'évaluation et de commande (11) régule l'amortissement du mouvement de fermeture du battant de porte (5) par la modulation de largeur d'impulsion du courant du moteur ($i_{(t)}$) en fonction de la vitesse actuelle et/ou de l'angle d'ouverture actuel du battant de porte (5), de façon à atteindre un temps de fermeture prédéterminé.

**10.** Dispositif de freinage selon la revendication 9, **caractérisé en ce que** l'unité d'évaluation et de commande (11) termine l'amortissement du mouvement de fermeture du battant de porte (5), lorsque le battant de porte (5) a atteint au moins une condition d'à-coup final prédéterminée.

**11.** Dispositif de freinage selon la revendication 10, **caractérisé en ce qu'**une vitesse d'à-coup final et/ou une position d'à-coup final sont prédéterminées comme condition d'à-coup final.

**12.** Dispositif de freinage selon l'une quelconque des revendications 1 à 11, **caractérisé en ce que** la tension du moteur ($u_{(t)}$) est appliquée à un circuit électrique de charge (12), qui accumule de l'énergie électrique dans un condensateur (C) pour l'alimentation en énergie du dispositif de freinage (20).

**13.** Dispositif de freinage selon l'une quelconque des revendications 1 à 12, **caractérisé en ce que** des paramètres et/ou des valeurs limites pour l'amortissement du mouvement du battant de porte (5) sont stockés dans une mémoire non volatile (19).

**14.** Dispositif de freinage selon la revendication 13, **caractérisé en ce que** la mémoire non volatile (19) peut, lorsque le dispositif de freinage (20) est sans courant, être écrite par RFID ou NFC ou au moyen d'une tension auxiliaire.

**15.** Dispositif de freinage selon une revendication 13 ou 14, **caractérisé en ce que** l'unité d'évaluation et de commande (11) incrémente un compteur dans la mémoire non volatile (19) à chaque cycle d'ouverture du battant de porte (5).

**16.** Dispositif de fermeture de porte (1) avec un accumulateur d'énergie mécanique (28), qui peut être rechargé d'énergie potentielle par ouverture manuelle du battant de porte (5), laquelle ferme le battant de porte (5) quand on le lâche, et avec un dispositif de freinage (20), qui amortit le mouvement du battant de porte (5), **caractérisé en ce que** le dispositif de freinage (20) est réalisé selon au moins une des revendications 1 à 15.

FIG. 1

FIG. 2

EP 3 245 728 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005028007 B4